# EUROPEAN PATENT APPLICATION

(11) **EP 4 819 516 A1**
(43) Date of publication of application: **07.10.2026**
(21) Application number: 24899210.9
(22) Date of filing: 26.06.2024
(51) Int. Cl.: H04L 1/00

(54) **DATA ACKNOWLEDGEMENT AND TRANSMISSION METHOD, NETWORK DEVICE, AND STORAGE MEDIUM**

(30) Priority: 05.12.2023 CN 202311669529
(71) Applicant: ZTE CORPORATION, Shenzhen, Guangdong 518057 (CN)
(72) Inventor: LIU, Yu, Shenzhen, Guangdong 518057 (CN); XIE, Feng, Shenzhen, Guangdong 518057 (CN); WANG, Fei, Shenzhen, Guangdong 518057 (CN)
(74) Representative: Savi, Massimiliano
(86) International application number: PCT/CN2024/101484
(87) International publication number: WO 2025/118559

(57) **Abstract**

Provided in the present application are a data acknowledgement and transmission method, a network device, and a storage medium. The method comprises: sending to a receiver device a plurality of data segments comprising segment offset information, such that on the basis of the segment offset information, the receiver device determines the integrity of reception for the plurality of data segments, wherein the data segments are generated on the basis of a data block, and the segment offset information is used for determining an offset of each data segment relative to a head address of the data block.

## Description

### CROSS-REFERENCE TO RELATED APPLICATION

The present invention claims priority to Chinese Patent Application No. 202311669529.8, filed with the China National Intellectual Property Administration on December 5, 2023, and entitled "Data Acknowledgment Transmission Method, Network Device, and Storage Medium", the entire content of which is incorporated herein by reference into the present invention.

### TECHNICAL FIELD

Embodiments of the present application relate to but are not limited to the field of communication technologies, and in particular, to a data acknowledgment transmission method, a network device, and a storage medium.

### BACKGROUND

In current wireless communication systems, the data is mainly data packets from an application layer, whereas for future wireless communication systems such as 6G, the data may be data blocks from inside the system, for example, new-type data blocks including artificial intelligence (AI) data, sensing data, and computing power data, etc. However, in current wireless communication systems, there is no transmission guarantee method directed to such new-type data blocks generated inside the system, and therefore current wireless communication systems are unable to ensure in-order reception and complete reception of such new-type data blocks. Therefore, how to ensure in-order reception and complete reception of new-type data blocks generated inside future wireless communication systems such as 6G is a technical problem to be urgently resolved.

### SUMMARY

Embodiments of the present application provide a data acknowledgment transmission method, a network device, and a storage medium, which are able to ensure in-order reception and complete reception of new-type data blocks generated inside future wireless communication systems such as 6G.

In accordance with one aspect of the present application, an embodiment provides a data acknowledgment transmission method, including: transmitting, to a receiving end device, a plurality of data segments including segment offset information, so that the receiving end device determines reception completeness of the plurality of the data segments according to the segment offset information, wherein the data segments are generated according to a data block, and the segment offset information is used for determining an offset of the data segment relative to a start address of the data block.

In accordance with another aspect of the present application, an embodiment further provides a data acknowledgment transmission method, including: receiving a plurality of data segments transmitted by a transmitting end device, wherein the data segments are generated according to a data block, the data segments include segment offset information, and the segment offset information is used for determining an offset of the data segment relative to a start address of the data block; and determining reception completeness of the plurality of the data segments according to the segment offset information.

In accordance with another aspect of the present application, an embodiment further provides a network device, including a memory, a processor and a computer program stored in the memory and executable by the processor, the computer program, when executed by the processor, causes the processor to perform the data acknowledgment transmission method as described above.

In accordance with another aspect of the present application, an embodiment further provides a computer-readable storage medium, storing computer-executable instructions which, when executed by a processor, cause the processor to perform the data acknowledgment transmission method as described above.

In accordance with another aspect of the present application, an embodiment further provides a computer program product, including a computer program or computer instructions, wherein the computer program or the computer instructions are stored in a computer-readable storage medium, a processor of a network device reads the computer program or the computer instructions from the computer-readable storage medium, and the processor executes the computer program or the computer instructions to cause the network device to execute the data acknowledgment transmission method as described above.

### BRIEF DESCRIPTION OF DRAWINGS

FIG. 1 is a flowchart of a data acknowledgment transmission method according to an embodiment of the present application;
FIG. 2 is a schematic diagram of a plurality of data segments including segment offset information according to an embodiment of the present application;
FIG. 3 is a flowchart of a data acknowledgment transmission method according to another embodiment of the present application;
FIG. 4 is a flowchart of a data acknowledgment transmission method according to another embodiment of the present application;
FIG. 5 is a schematic flowchart of a receiving end device receiving a new-type data block in order according to an embodiment of the present application;
FIG. 6 is a schematic diagram of a status protocol data unit transmitted by a receiving end device according to an embodiment of the present application;
FIG. 7 is a schematic flowchart of a receiving end device transmitting a status protocol data unit according to an embodiment of the present application; and
FIG. 8 is a schematic diagram of a network device according to an embodiment of the present application.

### DETAILED DESCRIPTION

To make the objectives, technical methods, and advantages of the present application clearer, the present application will be further described in detail below in conjunction with the accompanying drawings and embodiments. It should be understood that the specific embodiments described herein are merely used for explaining the present application, and are not intended to limit the present application.

It should be noted that, although a logical order is shown in the flowcharts, in some cases, the steps shown or described may be executed in an order different from that in the flowcharts. In the description of the specification, the claims, and the foregoing drawings, the meaning of "a plurality" (or "multiple items") is two or more; "greater than", "less than", and "exceeding" are understood as not including the number itself, while "or more", "or less", and "within" are understood as including the number itself. If terms such as "first" and "second" are described, they are only used for the purpose of distinguishing technical features, and are not to be construed as indicating or implying relative importance, or as implicitly indicating the number of indicated technical features or as implicitly indicating the order of the indicated technical features.

It is worth noting that, in current wireless communication systems, for example, the Long Term Evolution (LTE) wireless communication system and the 5G New Radio (5G NR) communication system, the application-layer data being transmitted is mostly Internet Protocol (IP) messages (or referred to as data packets), where the length of an IP message is generally 1500 bytes (for example, a standard Ethernet frame) or 9000 bytes (for example, a Jumbo frame). In future wireless communication systems, for example, future wireless communication systems such as 6G, since these future wireless communication systems support new services such as AI, sensing, and computing power, the data transmitted in these future wireless communication systems may not be IP-based messages, but rather new-type AI data, sensing data, or computing power data, etc. Since such data is not a traditional IP-based message, such data may be collectively referred to as new-type data (or referred to as new-type data blocks). Such new-type data may not be from the application layer, but rather from data generated inside these future wireless communication systems.

For IP messages (i.e., the traditional data packets), the data is from the application layer, and the corresponding transmission mode can be classified into an acknowledged transmission mode (i.e., AM mode) and an unacknowledged transmission mode (i.e., UM mode). When data packets are transmitted in the communication system, each data packet is numbered, that is, a sequence number (SN) is added in the data header of the data packet; after the receiving end receives the data packets, the receiving end is able to deliver the data packets in order to an upper layer for processing according to the magnitude of the SN. For the acknowledged transmission mode, the receiving end is able to acknowledge the reception status of the data packets via the SN.

For new-type data blocks, the data may be from inside future wireless communication systems, and the amount of data may also be relatively large (such as a large file). To ensure effective transmission of such new-type data blocks, such new-type data blocks may be segmented and transmitted. If during transmission, a certain data segment in the new-type data block is lost, then the receiving end may be unable to use the entire new-type data block (such as a file). However, in current wireless communication systems, there is no transmission guarantee measure for such new-type data blocks, that is, it is not possible to ensure that the transmitting end is able to completely transmit the entire new-type data block in order, and it is not possible to ensure that the receiving end is able to correctly receive the entire new-type data block.

To ensure in-order reception and complete reception of new-type data blocks generated inside future wireless communication systems such as 6G, embodiments of the present application provide a data acknowledgment transmission method, a network device, a computer-readable storage medium, and a computer program product. The transmitting end device, when transmitting a new-type data block including AI data, sensing data, and computing power data, etc., to the receiving end device, transmits to the receiving end device a plurality of data segments including segment offset information, so that the receiving end device determines reception completeness of the plurality of the data segments according to the segment offset information, wherein the data segments are generated according to the data block, and the segment offset information is used for determining an offset of the data segment relative to a start address of the data block. Since the plurality of data segments including the segment offset information transmitted to the receiving end device by the transmitting end device are generated according to the data block, and the segment offset information in the data segments can be used for determining the offset of the data segment relative to the start address of the data block, after the receiving end device receives these data segments, it is possible to determine the original positions of each data segment in the data block according to the segment offset information in these data segments, thereby ensuring in-order reception of these data segments. Moreover, it is also possible to determine reception completeness of these data segments according to whether any of these data segments in the data block is missing. That is to say, embodiments of the present application are able to ensure in-order reception and complete reception of new-type data blocks generated inside future wireless communication systems such as 6G.

Based on the above analysis, embodiments of the present application will be further described below in conjunction with the accompanying drawings.

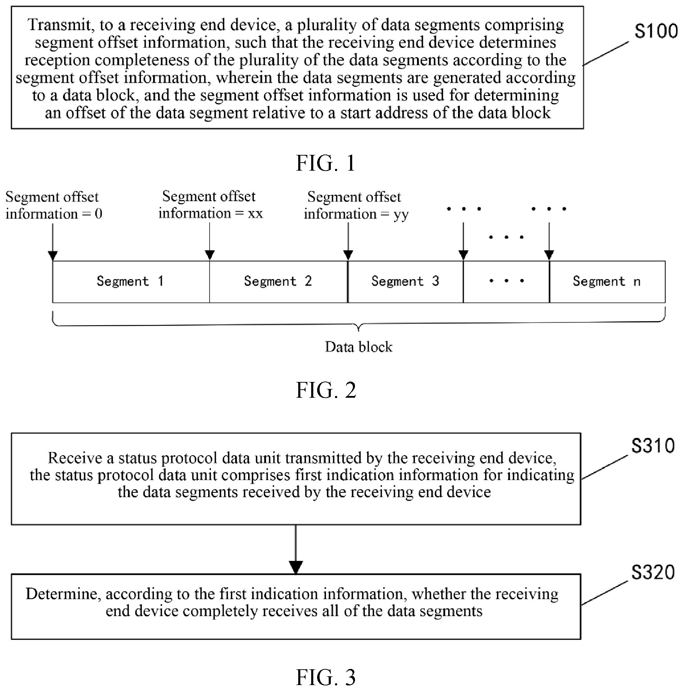

Referring to FIG. 1, FIG. 1 is a flowchart of a data acknowledgment transmission method according to an embodiment of the present application. The data acknowledgment transmission method may be executed by a transmitting end device, and the data acknowledgment transmission method may include but is not limited to step S100.

At step S100: a plurality of data segments including segment offset information is transmitted to a receiving end device, so that the receiving end device determines reception completeness of the plurality of the data segments according to the segment offset information, wherein the data segments are generated according to a data block, and the segment offset information is used for determining an offset of the data segment relative to a start address of the data block.

In an embodiment, the data block may include but is not limited to at least one of AI data, sensing data, and computing power data. For example, in addition to including data such as AI data, sensing data, and computing power data, the data block may also include other new-type data from inside the wireless communication system, which is not specifically limited herein.

In an embodiment, the data block may be segmented according to a granted size, and each segment is referred to as a data segment (Segment).

In an embodiment, since the segment offset information can be used for determining the offset of the data segment relative to the start address of the data block, after the transmitting end device transmits to the receiving end device the plurality of data segments including the segment offset information that are generated from the data block, the receiving end device is enabled to determine the original positions of each data segment in the data block according to the segment offset information in these data segments, thereby ensuring in-order reception of these data segments. Moreover, it is also possible to determine reception completeness of these data segments according to whether any of these data segments in the data block is missing. Referring to FIG. 2, FIG. 2 exemplarily presents a schematic diagram of a plurality of data segments including segment offset information. In FIG. 2, assuming that the data block is divided into n data segments, then the segment offset information of the first data segment (i.e., Segment 1) may be 0, indicating that the offset of Segment 1 relative to the start address of the data block is 0; the segment offset information of the second data segment (i.e., Segment 2) may be xx, indicating that the offset of Segment 2 relative to the start address of the data block is xx; and the segment offset information of the third data segment (i.e., Segment 3) may be yy, indicating that the offset of Segment 3 relative to the start address of the data block is yy. Therefore, according to the segment offset information of Segment 1 to Segment n, the original positions of Segment 1 to Segment n in the data block can be determined, thereby ensuring in-order reception of Segment 1 to Segment n, and it is possible to determine reception completeness of Segment 1 to Segment n according to whether any of Segment 1 to Segment n is missing.

In an embodiment, the data segment may include a data header, the segment offset information is carried in the data header, and the data header does not carry a sequence number. The new processing manner proposed in the embodiments of the present application is applicable to the case where the data header does not carry a sequence number, and the original position of each data segment in the data block can be determined according to the segment offset information, which not only ensures in-order reception of these data segments, but also can determine whether these data segments are completely received according to whether any of these data segments is missing.

In an embodiment, the segment offset information may include only segmentation information (Segmentation Info, SI), or may include both the segmentation information and a segment offset value (Segment Offset, SO), wherein the segmentation information may be used for indicating a segmentation type of the corresponding data segment, and the segment offset value may be used for representing an offset of the corresponding data segment relative to the start address of the data block. In an embodiment, the unit of the segment offset value may be a byte, which is not specifically limited herein.

In an embodiment, when the value of the segmentation information is a first value (for example, may be 0b00), it may indicate that the corresponding data segment is not segmented data, that is to say, the corresponding data segment is a complete data block. When the value of the segmentation information is a second value (for example, may be 0b01), it may indicate that the corresponding data segment is the first data segment (i.e., Segment 1). When the value of the segmentation information is a third value (for example, may be 0b10), it may indicate that the corresponding data segment is the last data segment; for example, if the number of data segments is 10, then the corresponding data segment is Segment 10. When the value of the segmentation information is a fourth value (for example, may be 0b11), it may indicate that the corresponding data segment is an intermediate data segment; for example, if the number of data segments is 10, then the corresponding data segment is any one of Segment 2 to Segment 9.

In an embodiment, when the value of the segmentation information is the first value (for example, may be 0b00), since it indicates that the corresponding data segment is not segmented data, in this case, the segment offset information may include only the segmentation information.

In an embodiment, when the value of the segmentation information is the second value (for example, may be 0b01), since it indicates that the corresponding data segment is Segment 1, and the offset of Segment 1 relative to the start address of the data block is 0, in this case, the segment offset information may not include the offset of Segment 1 relative to the start address of the data block, that is to say, the segment offset information may include only the segmentation information.

In an embodiment, when the value of the segmentation information is the third value (for example, may be 0b10), since it indicates that the corresponding data segment is the last data segment, in this case, the segment offset information may include both the segmentation information and the segment offset value, wherein the segment offset value may provide the offset of the start address of the last data segment relative to the start address of the data block.

In an embodiment, when the value of the segmentation information is the fourth value (for example, may be 0b11), since it indicates that the corresponding data segment is an intermediate data segment, in this case, the segment offset information may include both the segmentation information and the segment offset value, wherein the segment offset value may provide the offset of the start address of the intermediate data segment relative to the start address of the data block.

In the present embodiment, by adopting the data acknowledgment transmission method including the above step S100, since the plurality of data segments including the segment offset information transmitted to the receiving end device are generated according to the data block, and the segment offset information in the data segments can be used for determining the offset of the data segment relative to the start address of the data block, after the receiving end device receives these data segments, the original position of each data segment in the data block can be determined according to the segment offset information in these data segments, thereby ensuring in-order reception of these data segments. Moreover, reception completeness of these data segments can also be determined according to whether any of these data segments in the data block is missing. Therefore, embodiments of the present application are able to ensure in-order reception and complete reception of new-type data blocks generated inside future wireless communication systems such as 6G.

In an embodiment, referring to FIG. 3, the data acknowledgment transmission method may further include but is not limited to the following step S310 to step S320.

At step S310: a status protocol data unit transmitted by the receiving end device is received, wherein the status protocol data unit includes first indication information for indicating the data segments received by the receiving end device.

At step S320: whether the receiving end device completely receives all of the data segments is determined according to the first indication information.

In an embodiment, after the receiving end device receives the plurality of data segments including the segment offset information transmitted by the transmitting end device, the receiving end device may generate, according to the received data segments, a status protocol data unit (STATUS PDU) including the first indication information, and then transmit the status protocol data unit to the transmitting end device. Since the first indication information can be used for indicating the data segments received by the receiving end device, the transmitting end device can determine the data segment reception situation of the receiving end device according to the first indication information in the status protocol data unit.

In an embodiment, the status protocol data unit transmitted by the receiving end device may further include second indication information for indicating the data segments that have not been received by the receiving end device; in this case, the data acknowledgment transmission method may further include but is not limited to the following step:
retransmitting, according to the second indication information, the data segments that have not been received by the receiving end device to the receiving end device.

In an embodiment, since the status protocol data unit transmitted by the receiving end device further includes the second indication information for indicating the data segments that have not been received by the receiving end device, after the transmitting end device receives the status protocol data unit, the second indication information may be read from the status protocol data unit, and then, according to the data segments that have not been received by the receiving end device as indicated by the second indication information, the data segments that have not been received by the receiving end device are retransmitted to the receiving end device. For example, assuming that the second indication information indicates that the receiving end device has not received Segment 5, then the transmitting end device may retransmit only Segment 5 to the receiving end device. For another example, assuming that the second indication information indicates that the receiving end device has not received Segment 5 and Segment 8, then the transmitting end device may retransmit only Segment 5 and Segment 8 to the receiving end device. That is to say, when the transmitting end device performs retransmission of the data segments according to the second indication information, the transmitting end device may retransmit only the data segments that have not been received by the receiving end device, without having to retransmit all of the data segments. Therefore, the efficiency of data retransmission can be effectively improved.

In an embodiment, the second indication information includes at least one piece of unreceived-segment offset information, one piece of the unreceived-segment offset information is used for representing one data segment that has not been received by the receiving end device; the unreceived-segment offset information includes segment offset start information and segment offset end information, the segment offset start information is used for representing an offset value of a first byte of the data segment that has not been received by the receiving end device, the segment offset end information is used for representing an offset value of a last byte of the data segment that has not been received by the receiving end device, and the offset value is used for representing an offset of the byte relative to the start address of the data block. When the second indication information includes one piece of unreceived-segment offset information, it indicates that the receiving end device has not received one data segment represented by the piece of unreceived-segment offset information; when the second indication information includes a plurality of pieces of unreceived-segment offset information, it indicates that the receiving end device has not received a plurality of data segments represented by the plurality of pieces of unreceived-segment offset information. For example, assuming that the second indication information includes 3 pieces of unreceived-segment offset information, it indicates that the receiving end device has not received 3 data segments, and these 3 data segments are not contiguous with each other.

In an embodiment, the status protocol data unit may be transmitted by the receiving end device after receiving an acknowledgment request information transmitted by the transmitting end device, or may be transmitted by the receiving end device after a preset timer expires, and the choice may be appropriately made according to actual application situations, which is not specifically limited herein. For example, when the status protocol data unit is transmitted by the receiving end device after receiving the acknowledgment request information transmitted by the transmitting end device, every time the transmitting end device has finished transmitting a certain number of data segments included in a data block, the transmitting end device may transmit an acknowledgment request information to the receiving end device for requesting from the receiving end device the reception situation of the data block; after the receiving end device receives the acknowledgment request information, the receiving end device may generate, according to the received data segments and the data segments that have not been received, a status protocol data unit including the first indication information and the second indication information, and then transmit the status protocol data unit to the transmitting end device, so that the transmitting end device can determine, according to the first indication information and the second indication information in the status protocol data unit, whether the receiving end device has completely received all of the data segments, and determine, according to the second indication information in the status protocol data unit, the data segments that need to be retransmitted to the receiving end device. For another example, when the status protocol data unit is transmitted by the receiving end device after the preset timer expires, every time the receiving end device receives the first data segment transmitted by the transmitting end device, the receiving end device may start a preset timer; after the timer expires, the receiving end device generates, according to the received data segments and the data segments that have not been received, a status protocol data unit including the first indication information and the second indication information, and then transmits the status protocol data unit to the transmitting end device, so that the transmitting end device can determine, according to the first indication information and the second indication information in the status protocol data unit, whether the receiving end device has completely received all of the data segments, and determine, according to the second indication information in the status protocol data unit, the data segments that need to be retransmitted to the receiving end device.

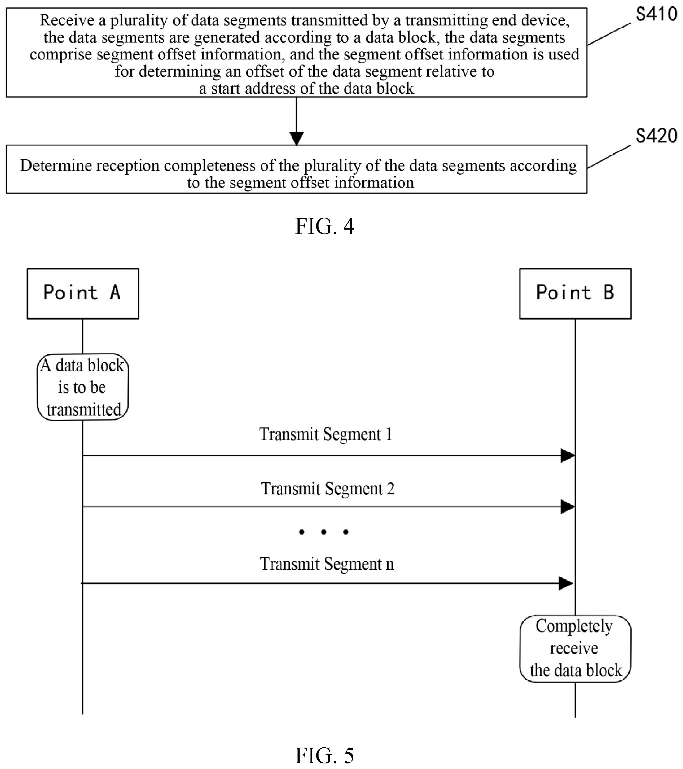

Referring to FIG. 4, FIG. 4 is a flowchart of a data acknowledgment transmission method according to another embodiment of the present application. The data acknowledgment transmission method may be executed by a receiving end device, and the data acknowledgment transmission method may include but is not limited to step S410 to step S420.

At step S410: a plurality of data segments transmitted by a transmitting end device is received, wherein the data segments are generated according to a data block, the data segments include segment offset information, and the segment offset information is used for determining an offset of the data segment relative to a start address of the data block.

At step S420: reception completeness of the plurality of the data segments is determined according to the segment offset information.

In an embodiment, the data block may include but is not limited to at least one of AI data, sensing data, and computing power data. For example, in addition to including data such as AI data, sensing data, and computing power data, the data block may also include other new-type data from inside the wireless communication system, which is not specifically limited herein.

In an embodiment, the data block may be segmented according to a granted size, and each segment is referred to as a data segment (Segment).

In an embodiment, since the segment offset information can be used for determining the offset of the data segment relative to the start address of the data block, after the receiving end device receives the plurality of data segments including the segment offset information that are generated from the data block and transmitted by the transmitting end device, the original position of each data segment in the data block can be determined according to the segment offset information in these data segments, thereby ensuring in-order reception of these data segments. Moreover, reception completeness of these data segments can also be determined according to whether any of these data segments in the data block is missing.

In an embodiment, after the receiving end device receives the plurality of data segments transmitted by the transmitting end device, the data segments may further be saved to corresponding offset positions according to the segment offset information so as to perform a restoration processing on the data block. By saving the data segments to corresponding offset positions according to the segment offset information so as to perform restoration processing on the data block, not only can in-order reception of these data segments be effectively ensured, but also whether these data segments are missing can be effectively determined, thereby enabling determination of reception completeness of these data segments.

In an embodiment, the data segment may include a data header, the segment offset information is carried in the data header, and the data header does not carry a sequence number. The new processing manner proposed in the embodiments of the present application is applicable to the case where the data header does not carry a sequence number, and the original position of each data segment in the data block can be determined according to the segment offset information, which not only ensures in-order reception of these data segments, but also can determine whether these data segments are completely received according to whether any of these data segments is missing.

In an embodiment, the segment offset information may include only the segmentation information (i.e., SI), or may include both the segmentation information and the segment offset value (i.e., SO), wherein the segmentation information may be used for indicating a segmentation type of the corresponding data segment, and the segment offset value may be used for representing an offset of the corresponding data segment relative to the start address of the data block. In an embodiment, the unit of the segment offset value may be a byte, which is not specifically limited herein.

In an embodiment, when the value of the segmentation information is a first value (for example, may be 0b00), it may indicate that the corresponding data segment is not segmented data, that is to say, the corresponding data segment is a complete data block. When the value of the segmentation information is a second value (for example, may be 0b01), it may indicate that the corresponding data segment is the first data segment (i.e., Segment 1). When the value of the segmentation information is a third value (for example, may be 0b10), it may indicate that the corresponding data segment is the last data segment; for example, if the number of data segments is 10, then the corresponding data segment is Segment 10. When the value of the segmentation information is a fourth value (for example, may be 0b11), it may indicate that the corresponding data segment is an intermediate data segment; for example, if the number of data segments is 10, then the corresponding data segment is any one of Segment 2 to Segment 9.

In an embodiment, when the value of the segmentation information is the first value (for example, may be 0b00), since it indicates that the corresponding data segment is not segmented data, in this case, the segment offset information may include only the segmentation information.

In an embodiment, when the value of the segmentation information is the second value (for example, may be 0b01), since it indicates that the corresponding data segment is Segment 1, and the offset of Segment 1 relative to the start address of the data block is 0, in this case, the segment offset information may not include the offset of Segment 1 relative to the start address of the data block, that is to say, the segment offset information may include only the segmentation information.

In an embodiment, when the value of the segmentation information is the third value (for example, may be 0b10), since it indicates that the corresponding data segment is the last data segment, in this case, the segment offset information may include both the segmentation information and the segment offset value, wherein the segment offset value may provide the offset of the start address of the last data segment relative to the start address of the data block.

In an embodiment, when the value of the segmentation information is the fourth value (for example, may be 0b11), since it indicates that the corresponding data segment is an intermediate data segment, in this case, the segment offset information may include both the segmentation information and the segment offset value, wherein the segment offset value may provide the offset of the start address of the intermediate data segment relative to the start address of the data block.

In the present embodiment, by adopting the data acknowledgment transmission method including the above step S410 to step S420, since the received plurality of data segments including the segment offset information are generated by the transmitting end device according to the data block, and the segment offset information in the data segments can be used for determining the offset of the data segment relative to the start address of the data block, after these data segments are received, the original position of each data segment in the data block can be determined according to the segment offset information in these data segments, thereby ensuring in-order reception of these data segments. Moreover, reception completeness of these data segments can also be determined according to whether any of these data segments in the data block is missing. Therefore, embodiments of the present application are able to ensure in-order reception and complete reception of new-type data blocks generated inside future wireless communication systems such as 6G.

In an embodiment, the data acknowledgment transmission method may further include but is not limited to the following step:
transmitting, to the transmitting end device, a status protocol data unit including first indication information, so that the transmitting end device determines, according to the first indication information, whether all of the data segments have been completely received, wherein the first indication information is used for indicating the data segments that have been received.

In an embodiment, after the plurality of data segments including the segment offset information transmitted by the transmitting end device are received, the receiving end device may generate, according to the received data segments, a status protocol data unit including the first indication information, and then transmit the status protocol data unit to the transmitting end device. Since the first indication information can be used for indicating the data segments that have been received, the transmitting end device can determine, according to the first indication information in the status protocol data unit, the data segment reception situation of the receiving end device.

In an embodiment, the status protocol data unit transmitted by the receiving end device may further include second indication information for indicating the data segments that have not been received; in this case, the data acknowledgment transmission method may further include but is not limited to the following step:
receiving the data segments that have not been received that are retransmitted by the transmitting end device according to the second indication information.

In an embodiment, since the status protocol data unit transmitted by the receiving end device further includes the second indication information for indicating the data segments that have not been received, after the transmitting end device receives the status protocol data unit, the second indication information may be read from the status protocol data unit, and then, according to the data segments that have not been received as indicated by the second indication information, the data segments that have not been received by the receiving end device are retransmitted to the receiving end device. For example, assuming that the second indication information indicates that Segment 5 has not been received, then the transmitting end device may retransmit only Segment 5 to the receiving end device, and therefore the receiving end device may receive Segment 5 retransmitted by the transmitting end device according to the second indication information. For another example, assuming that the second indication information indicates that Segment 5 and Segment 8 have not been received, then the transmitting end device may retransmit only Segment 5 and Segment 8 to the receiving end device, and therefore the receiving end device may receive Segment 5 and Segment 8 retransmitted by the transmitting end device according to the second indication information. That is to say, when the transmitting end device performs retransmission of the data segments according to the second indication information, the transmitting end device may retransmit only the data segments that have not been received by the receiving end device, without having to retransmit all of the data segments. Therefore, the efficiency of data retransmission can be effectively improved.

In an embodiment, the second indication information includes at least one piece of unreceived-segment offset information, one piece of the unreceived-segment offset information is used for representing one data segment that has not been received; the unreceived-segment offset information includes segment offset start information and segment offset end information, the segment offset start information is used for representing an offset value of a first byte of the data segment that has not been received, the segment offset end information is used for representing an offset value of a last byte of the data segment that has not been received, and the offset value is used for representing an offset of the byte relative to the start address of the data block. When the second indication information includes one piece of unreceived-segment offset information, it indicates that the receiving end device has not received one data segment represented by the piece of unreceived-segment offset information; when the second indication information includes a plurality of pieces of unreceived-segment offset information, it indicates that the receiving end device has not received a plurality of data segments represented by the plurality of pieces of unreceived-segment offset information. For example, assuming that the second indication information includes 3 pieces of unreceived-segment offset information, it indicates that the receiving end device has not received 3 data segments, and these 3 data segments are not contiguous with each other.

In an embodiment, the status protocol data unit may be transmitted by the receiving end device after receiving an acknowledgment request information transmitted by the transmitting end device, or may be transmitted by the receiving end device after a preset timer expires, and the choice may be appropriately made according to actual application situations, which is not specifically limited herein. For example, when the status protocol data unit is transmitted by the receiving end device after receiving the acknowledgment request information transmitted by the transmitting end device, every time the transmitting end device has finished transmitting a certain number of data segments included in a data block, the transmitting end device may transmit an acknowledgment request information to the receiving end device for requesting from the receiving end device the reception situation of the data block; after the receiving end device receives the acknowledgment request information, the receiving end device may generate, according to the received data segments and the data segments that have not been received, a status protocol data unit including the first indication information and the second indication information, and then transmit the status protocol data unit to the transmitting end device, so that the transmitting end device can determine, according to the first indication information and the second indication information in the status protocol data unit, whether the receiving end device has completely received all of the data segments, and determine, according to the second indication information in the status protocol data unit, the data segments that need to be retransmitted to the receiving end device. For another example, when the status protocol data unit is transmitted by the receiving end device after the preset timer expires, every time the receiving end device receives the first data segment transmitted by the transmitting end device, the receiving end device may start a preset timer; after the timer expires, the receiving end device generates, according to the received data segments and the data segments that have not been received, a status protocol data unit including the first indication information and the second indication information, and then transmits the status protocol data unit to the transmitting end device, so that the transmitting end device can determine, according to the first indication information and the second indication information in the status protocol data unit, whether the receiving end device has completely received all of the data segments, and determine, according to the second indication information in the status protocol data unit, the data segments that need to be retransmitted to the receiving end device.

The data acknowledgment transmission method provided by the embodiments of the present application will be described in detail below with specific examples.

For example, referring to FIG. 5, FIG. 5 is a schematic flowchart of a receiving end device receiving a new-type data block in order according to an embodiment of the present application. In FIG. 5, when the transmitting end device Point A is to transmit a new-type data block, the transmitting end device Point A, according to the data amount size of the current grant (a dynamic grant or a preset grant), segments the new-type data block, and then transmits the current data segment; for example, after each grant (a dynamic grant or a preset grant) is received, data segmentation is performed according to the current granted size, and then the current data segment is transmitted. When the transmitting end device Point A segments the new-type data block, the transmitting end device Point A records the segment offset information of each data segment in the data header of each data segment, and does not add SN in the data header of each data segment. After the receiving end device Point B receives each data segment, the corresponding data segment may be saved to a corresponding offset position according to the segment offset information in the data header of each data segment; when the receiving end device Point B has received all of the data segments, the in-order reception process for the entire new-type data block is completed.

By using the segment offset information to record the offset of the data segment relative to the start address of the data block to ensure in-order reception and complete reception of the new-type data block, it is not necessary to rely on the SN in the related art. Moreover, the intermediate node located between the transmitting end device Point A and the receiving end device Point B also does not need to consider the issue of delivering the data segments in order, that is to say, even if the order in which these data segments arrive at the receiving end device Point B is not the order of 1, 2, ..., n, the in-order and complete reception of the entire new-type data block by the receiving end device Point B is not affected.

It should be noted that both the transmitting end device Point A and the receiving end device Point B may be any two nodes in the communication system, for example, a user equipment (UE), a base station, a certain network element in a core network, or other data transmitting devices, processing devices, receiving devices, etc.

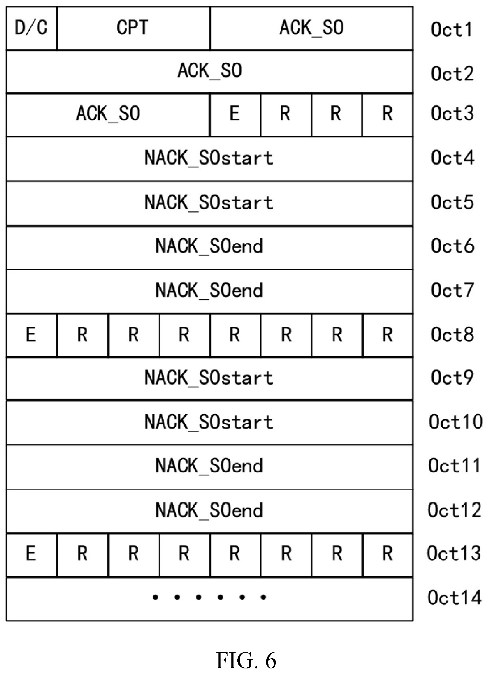

In an embodiment, during the process in which the transmitting end device transmits a new-type data block to the receiving end device, the new-type data block being transmitted may be divided into a plurality of data segments, and the loss of any one of the data segments may cause the entire data block to be unusable. Therefore, for the transmitting end device, it is necessary to know whether each data segment has been successfully transmitted to the receiving end device. Since none of the plurality of data segments transmitted by the transmitting end device includes SN, it is necessary to design a new type of status protocol data unit (STATUS PDU) for directly recording the reception status of each data segment. For example, as shown in FIG. 6, FIG. 6 exemplarily presents a schematic diagram of a status protocol data unit transmitted by a receiving end device. In FIG. 6, the meaning of each field in the status protocol data unit can be explained as follows:
D/C field: a data/control field, which occupies 1 bit. When the value of the D/C field is a first numerical value (for example, may be 0), it indicates that the current data unit is a control protocol data unit (i.e., Control PDU); when the value of the D/C field is a second numerical value (for example, may be 1), it indicates that the current data unit is a data protocol data unit (i.e., Data PDU).
CPT field: a type field, which occupies 3 bits. When the value of the CPT field is a first numerical value (for example, may be 0b000), it indicates that the current data unit is a status protocol data unit (i.e., STATUS PDU); when the value of the CPT field is a second numerical value (for example, may be any numerical value from 0b001 to 0b111), it indicates "Reserved", and when the transmitting end device receives a CPT field having such a value, the transmitting end device will discard the protocol data unit.
ACK_SO field: an SO acknowledgment field (i.e., the first indication information described above), which occupies 16 bits, and is used for indicating that, up to the SO indicated by ACK_SO, all of the previous data segments have been successfully received by the receiving end (including the byte indicated by the SO), except for the data segments indicated by the NACK_SOstart field and the NACK_SOend field in the current status protocol data unit.
E field: an NACK_SO indication field, which occupies 1 bit. When the value of the E field is a first numerical value (for example, may be 0), it indicates that no NACK_SOstart field, NACK_SOend field, or next E field follows the current E field; when the value of the E field is a second numerical value (for example, may be 1), it indicates that one set of NACK_SOstart field, NACK_SOend field, and next E field follows the current E field.
NACK_SOstart field: an SO negative acknowledgment start field (i.e., the segment offset start information in the second indication information described above), which occupies 16 bits, and is used for indicating an offset value of a first byte of a data segment that has not been received.
NACK_SOend field: an SO negative acknowledgment end field (i.e., the segment offset end information in the second indication information described above), which occupies 16 bits, and is used for indicating an offset value of a last byte of a data segment that has not been received.
R field: a reserved field.

In an embodiment, assuming that the segment offset value recorded in the NACK_SOstart field is byte 100 and the segment offset value recorded in the NACK_SOend field is byte n, then it indicates that none of the data segments from byte 100 to byte n has been received or has been successfully received.

In an embodiment, when the status protocol data unit includes multiple sets of NACK_SOstart fields and NACK_SOend fields, it indicates that there are a plurality of data segments that have not been received or have not been successfully received. For example, assuming that the status protocol data unit includes 2 sets of NACK_SOstart fields and NACK_SOend fields, where the segment offset value recorded in the NACK_SOstart field of the 1st set is byte 100, the segment offset value recorded in the NACK_SOend field of the 1st set is byte 150, the segment offset value recorded in the NACK_SOstart field of the 2nd set is byte 230, and the segment offset value recorded in the NACK_SOend field of the 2nd set is byte 300, then it indicates that none of the data segments from byte 100 to byte 150 and the data segments from byte 230 to byte 300 has been received or has been successfully received.

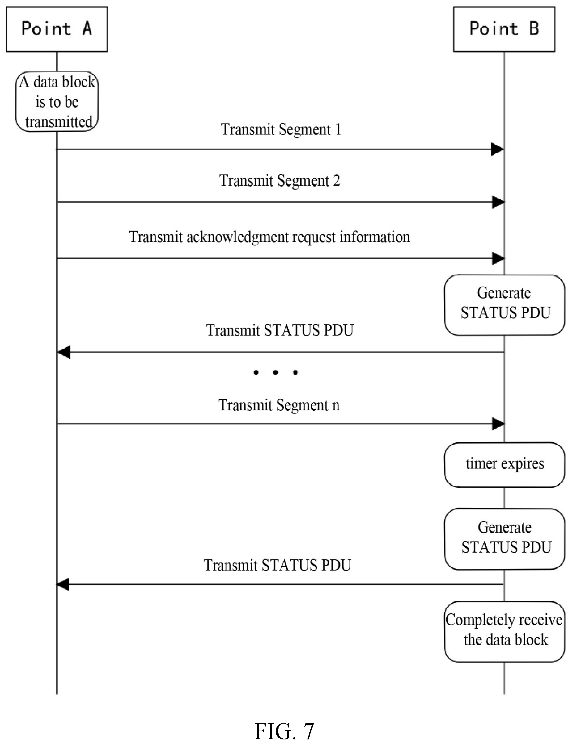

For example, as shown in FIG. 7, FIG. 7 is a schematic flowchart of a receiving end device transmitting a status protocol data unit according to an embodiment of the present application.

In one case, when the transmitting end device Point A is to transmit a new-type data block, the transmitting end device Point A transmits each data segment according to the data amount size of each grant; for example, after the transmitting end device Point A has finished transmitting 2 data segments, the transmitting end device Point A may transmit an acknowledgment request information to the receiving end device for requesting from the receiving end device the reception situation of these 2 data segments; after the receiving end device receives the acknowledgment request information, the receiving end device generates, according to the received data segments and the data segments that have not been received, a status protocol data unit including the first indication information and the second indication information, and then transmits the status protocol data unit to the transmitting end device, so that the transmitting end device can determine, according to the first indication information and the second indication information in the status protocol data unit, whether the receiving end device has completely received all of the data segments, and determine, according to the second indication information in the status protocol data unit, the data segments that need to be retransmitted to the receiving end device.

In another case, when the receiving end device receives the first data segment of the new-type data block, the receiving end device may start a preset timer; after the timer expires, the receiving end device generates, according to the received data segments and the data segments that have not been received, a status protocol data unit including the first indication information and the second indication information, and then transmits the status protocol data unit to the transmitting end device, so that the transmitting end device can determine, according to the first indication information and the second indication information in the status protocol data unit, whether the receiving end device has completely received all of the data segments, and determine, according to the second indication information in the status protocol data unit, the data segments that need to be retransmitted to the receiving end device.

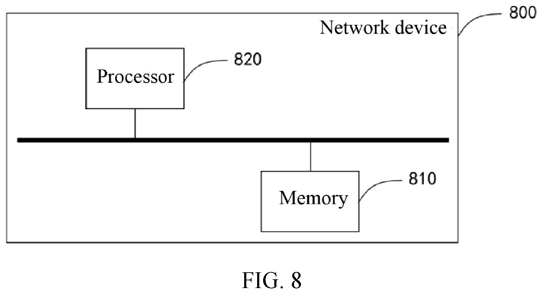

Referring to FIG. 8, an embodiment of the present application further discloses a network device. The network device 800 includes a memory 810, a processor 820, and a computer program stored on the memory 810 and executable on the processor 820, and the processor 820, when executing the computer program, implements the data acknowledgment transmission method as in any of the foregoing embodiments.

In addition, an embodiment of the present application further discloses a computer-readable storage medium having stored therein computer-executable instructions, wherein the computer-executable instructions are used for executing the data acknowledgment transmission method as in any of the foregoing embodiments.

Furthermore, an embodiment of the present application further discloses a computer program product, including a computer program or computer instructions, wherein the computer program or the computer instructions are stored in a computer-readable storage medium, a processor of a network device reads the computer program or the computer instructions from the computer-readable storage medium, and the processor executes the computer program or the computer instructions to cause the network device to execute the data acknowledgment transmission method as in any of the foregoing embodiments.

Those of ordinary skill in the art will understand that all or some of the steps and systems in the methods disclosed above may be implemented as software, firmware, hardware, and a suitable combination thereof. Some physical components or all physical components may be implemented as software executed by a processor, such as a central processing unit, a digital signal processor, or a microprocessor, or implemented as hardware, or implemented as an integrated circuit such as an application-specific integrated circuit. Such software may be distributed on a computer-readable medium, and the computer-readable medium may include a computer storage medium (or non-transitory medium) and a communication medium (or transitory medium). As is well known to those of ordinary skill in the art, the term "computer storage medium" includes volatile and non-volatile, removable and non-removable media implemented in any method or technology for storing information (such as computer-readable instructions, data structures, program modules, or other data). Computer storage media include, but are not limited to, RAM, ROM, EEPROM, flash memory or other memory technology, CD-ROM, digital versatile disc (DVD) or other optical disk storage, magnetic cassettes, magnetic tape, magnetic disk storage or other magnetic storage devices, or any other medium that can be used for storing the desired information and that can be accessed by a computer. Furthermore, as is well known to those of ordinary skill in the art, communication media typically embody computer-readable instructions, data structures, program modules, or other data in modulated data signals such as a carrier wave or other transport mechanism, and may include any information delivery medium.

The foregoing is a description of some implementations of the present application. However, the present application is not limited to the above embodiments. Those familiar with the art may further make various equivalent variations or substitutions without departing from the substance of the present application. These equivalent variations or substitutions are all included within the scope defined by the claims of the present application.

## Claims

1. A data acknowledgment transmission method, comprising:
transmitting, to a receiving end device, a plurality of data segments comprising segment offset information, such that the receiving end device determines reception completeness of the plurality of the data segments according to the segment offset information, wherein the data segments are generated according to a data block, and the segment offset information is used for determining an offset of the data segment relative to a start address of the data block.

2. The method of claim 1, wherein the data segment comprises a data header, the segment offset information is carried in the data header, and the data header does not carry a sequence number.

3. The method of claim 1, further comprising:
receiving a status protocol data unit transmitted by the receiving end device, wherein the status protocol data unit comprises first indication information for indicating the data segments received by the receiving end device; and
determining, according to the first indication information, whether the receiving end device completely receives all of the data segments.

4. The method of claim 3, wherein the status protocol data unit further comprises second indication information for indicating the data segments that have not been received by the receiving end device; the method further comprises:
retransmitting, according to the second indication information, the data segments that have not been received by the receiving end device to the receiving end device.

5. The method of claim 4, wherein the second indication information comprises at least one piece of unreceived-segment offset information; one piece of the unreceived-segment offset information is used for representing one of the data segments that has not been received by the receiving end device, the unreceived-segment offset information comprises segment offset start information and segment offset end information, the segment offset start information is used for representing an offset value of a first byte of the data segment that has not been received by the receiving end device, the segment offset end information is used for representing an offset value of a last byte of the data segment that has not been received by the receiving end device, and the offset value is used for representing an offset of the byte relative to the start address of the data block.

6. The method of claim 3, wherein the status protocol data unit is transmitted by the receiving end device in response to the receiving end device being in one of the following situations:
in response to receiving an acknowledgment request information; or
in response to expiration of a preset timer.

7. A data acknowledgment transmission method, comprising:
receiving a plurality of data segments transmitted by a transmitting end device, wherein the data segments are generated according to a data block, the data segments comprise segment offset information, and the segment offset information is used for determining an offset of the data segment relative to a start address of the data block; and
determining reception completeness of the plurality of the data segments according to the segment offset information.

8. The method of claim 7, further comprising:
saving the data segments to corresponding offset positions according to the segment offset information so as to perform a restoration processing on the data block.

9. The method of claim 7, wherein the data segment comprises a data header, the segment offset information is carried in the data header, and the data header does not carry a sequence number.

10. The method of claim 7, further comprising:
transmitting, to the transmitting end device, a status protocol data unit comprising first indication information, such that the transmitting end device determines, according to the first indication information, whether all of the data segments have been completely received, wherein the first indication information is used for indicating the data segments that have been received.

11. The method of claim 10, wherein the status protocol data unit further comprises second indication information for indicating the data segments that have not been received; the method further comprises:
receiving the data segments that have not been received that are retransmitted by the transmitting end device according to the second indication information.

12. The method of claim 11, wherein the second indication information comprises at least one piece of unreceived-segment offset information; one piece of the unreceived-segment offset information is used for representing one of the data segments that has not been received, the unreceived-segment offset information comprises segment offset start information and segment offset end information, the segment offset start information is used for representing an offset value of a first byte of the data segment that has not been received, the segment offset end information is used for representing an offset value of a last byte of the data segment that has not been received, and the offset value is used for representing an offset of the byte relative to the start address of the data block.

13. The method of claim 10, wherein the status protocol data unit is transmitted in response to one of the following situations:
in response to receiving an acknowledgment request information; or
in response to expiration of a preset timer.

14. A network device, comprising a memory, a processor and a computer program stored in the memory and executable by the processor, wherein the computer program, when executed by the processor, causes the processor to perform the data acknowledgment transmission method of any of claims 1 to 13.

15. A computer-readable storage medium, storing computer-executable instructions which, when executed by a processor, cause the processor to perform the data acknowledgment transmission method of any of claims 1 to 13.
